# EUROPEAN PATENT APPLICATION

(11) **EP 0 995 619 A1**
(43) Date of publication of application: **26.04.2000**
(21) Application number: 99500131.0
(22) Date of filing: 30.07.1999
(51) Int. Cl.: B60C 23/04, B60S 5/04

(54) **A device for controlling the pressure in the pneumatic tyres of motocars and similar vehicles**

(30) Priority: 21.10.1998 ES 9802402; 17.11.1998 ES 9802403; 14.04.1999 ES 9900775; 24.06.1999 ES 9901408
(71) Applicant: LOUREIRO BENIMELI, Fermin, Jaime, 08034 Barcelona (ES)
(72) Inventor: LOUREIRO BENIMELI, Fermin, Jaime, 08034 Barcelona (ES)
(74) Representative: Pastells Teixido, Manuel

(57) **Abstract**

A device for controlling the pressure in the pneumatic tyres of motorcars and similar vehicles, characterized in that it comprises a remote control unit (1) having a display (2) and a receiver sensor (3) actuated by means of a pushbutton (4), and a pressure-measuring instrument (5) installed in the wheel (R) and advantageously situated in the vicinity of the tyre inflation valve (I) and connected to a transmitter (6), in such a way that when bringing the remote control unit (1) near to the pressure-measuring instrument (5) and actuating the pushbutton (4) of the former the pressure of the tyre is visualized through the display (2) of the remote control unit (1). The receiver sensor (2) captures the internal pressure and temperature of the tyre, the device carrying out the conversion of the pressure corresponding to the normal ambient temperature of the tyre to the equivalent pressure as per the temperature of said tyre.

## Description

The present invention refers to a device for controlling the pressure in the pneumatic tyres of motorcars and similar vehicles.

As is well known, each size and type of pneumatic tyre requires a given pressure, said pressure also depending on the load to be carried by the motor vehicle.

As is also well known, the Traffic Rules provide that motor vehicles shall be driven with the corresponding pressure in the tyres. It must besides be taken into account that it is dangerous to drive a car having an insufficient or excessive pressure in the tyres.

In spite of the fact that the driver is aware of all these considerations cars are often driven with an inadequate pressure in their tyres because for most drivers it is too much trouble going to a petrol station to periodically check the pressure of the tyres.

An object of this invention is to provide the driver with a practical device that enables him or her to at any time and "in situ" check the pressure of the tyres. This device for such a purpose comprises: a remote control unit having a display and a receiver sensor actuated by means of a pushbutton; and a pressure-measuring instrument, for example an electronic manometer, installed in the wheel advantageously in the vicinity of the tyre inflation valve, as a reference point, and connected to a transmitter. By bringing the remote control unit near to the pressure-measuring instrument and by then actuating the pushbutton of the former the pressure of the tyre will be transmitted to the remote control unit and will then be displayed by the latter's display.

Preferably a microtransmitter will be used so as to bring the remote control unit pretty close to it and to thus avoid capturing in said operation the pressure of tyres of nearby vehicles.

This device will complementally comprise the memorized pressure of the tyres of a given motorcar thus reminding the driver of the correct pressure corresponding to them. For such a purpose the device will comprise means that will visualize through the display said pressures that will correspond to the motor vehicle with both a light and a heavy load.

This device will besides be advantageously prepared to provide the inflation of the tyres at the automated machines or facilities at those petrol stations having them. For such a purpose the remote control unit of this device will incorporate a transmitter actuated by means of a pushbutton and by whose means it will transmit the inflation command to said machine that will then inflate the pneumatic tyre to the pressure displayed by the display of the remote control unit.

Said display will preferably be a liquid-crystal display, and the transmissions will be carried out through radio waves, infrared rays, ultrasounds or other adequate means as best suited for each transmission.

As is well known, when the tyre is heated its pressure increases, and vice versa, so that the car being en route or because of any other circumstances, such as for example the car being in Africa or in the north of Europe, or else during a very hot summer or a very cold winter, the device will display a pressure different from tat corresponding to the tyre in normal temperature conditions, this making it impossible to know if said pressure being displayed is the correct one and is equivalent to the normal pressure. Thus for example if at a temperature between 5°C and 25°C the pressure of the tyre is supposed to be of 1.80, if the temperature reaches a value comprised between 40° and 50°C the equivalent pressure would be 1.90, and if the temperature sinks to a value comprised between 5° and -15°C the equivalent pressure would then be of 1.70.

In order to know the correct pressure under any circumstances as regards the changes of temperature it has been foreseen that the receiver sensor corresponding to the remote control unit picks up the pressure and also the internal temperature of the pneumatic tyre, the device carrying out the conversion of the pressure corresponding to the normal ambient temperature of the tyre to the equivalent pressure as per the actual temperature of the latter, in such a way that after having actuated the pushbutton corresponding to the wheel to be controlled and when bringing the remote control unit near to the pressure-measuring instrument of the wheel and actuating the pushbutton of the former the display will show the actual pressure of the tyre and also that corresponding to it as per its temperature and being equivalent to the correct pressure of the tyre at normal temperature.

The display of the remote control unit can also complementally visualize the internal temperature of the pneumatic tyre.

For the use of this device to inflate the wheels at an automated machine or facility and for the purpose of doing so with no need to insert coins into said machine the remote control unit has been provided to receive a chip card charged to provide a given number of inflations at said machines or facilities.

In order to make this device more handy all of the components integrating this remote control unit can be incorporated into a conventional remote control unit thus making use of its casing and its cell or battery, said conventional remote control unit being for example a remote control unit to control the opening of the access doors of a motorcar or of a garage door, or the switching on of an alarm system and other devices, said remote control unit also possibly comprising a key ring.

This device can also be used by the traffic police or the municipal police to inspect at a given moment the pressure of the tyres of a motor vehicle for example not being properly driven.

This device can of course be applied to all types of motor vehicles, and also to lorries, buses, motor coaches, motorcycles and similar vehicles.

This device doesn't face any problems when applied to motorcars and similar vehicles having one only wheel at each end of each axle, but when used for vehicles having twin wheels at the ends of their axles such as in the case of lorries, buses and other heavy vehicles due to the close vicinity of both wheels it is difficult to discriminate the pressure of each of said wheels when bringing the remote control unit near to it.

Under these circumstances, in order to know exactly the pressure of each of the wheels paired at the end of the axle it has been foreseen that each wheel, i.e. the outer and the inner wheel of the pair, has its transmitter emitting at a frequency different from that of the other wheel of the pair, the remote control unit comprising a receiver sensor for each of said two wheels in correspondence with the particular frequency of the transmitter of each of said wheels.

Each of these two sensors for the wheels of each pair will of course comprise the corresponding pushbutton on the remote control unit.

In order to avoid mistakes when installing the transmitters in the respective wheels of each pair it has been foreseen that the transmitter corresponding to the outer wheel of each pair has an appearance allowing to distinguish it from the transmitter to be installed in the inner wheel of the same pair.

In order to also avoid mistakes possibly made by the user of the device the pushbuttons provided on the remote control unit and corresponding to the sensors to be associated to the transmitters of the outer and inner wheel of each pair will also have an appearance allowing to distinguish them from each other.

The conventional cell equipping the remote control units being made use of to fit them with all of the components of this device for obtaining the control of the pressure of the tyres gets prematurely spent due to the periodical use of the remote control unit corresponding to the device in question, and mainly as a result of the transmissions made by said control unit to the pressure-measuring instrument of the tyres and also of the inflation commands transmitted to the automated machines or facilities.

In order to avoid having to frequently change the cell of the remote control unit it has been foreseen to incorporate into it as a power source a rechargeable battery instead of said cell.

When having detected that said battery has run down it will thus be possible to charge it again by employing any of the means known for such a purpose.

It is nevertheless advantageous that the remote control unit incorporates the ignition key for starting the vehicle, whereby and by providing the contact lock of the vehicle with the adequate installation connected to the cell or battery of the vehicle the battery of the remote control unit will be automatically charged by induction while the key is engaged in the contact lock.

The rechargeable battery of the remote control unit can also be inductively recharged by means of arranging said control unit on a support provided for such a purpose and connected to the electrical network.

Another system to recharge said battery can consist in connecting the remote control unit to the electrical network through an intervening transformer of the like.

It will be appreciated that for said recharging of the battery of the remote control unit any other means can be used, for such a purpose for example employing the charging connector provided in cars for the cigarette lighter, the remote control unit being then apt to be connected to said connector for such a purpose using the proper adapter.

These and other characteristics will be best made apparent by the following detailed description whose understanding will be made easier by the accompanying five sheets of drawings showing practical embodiments cited only by way of example not limiting the scope of the present invention.

In the drawings:

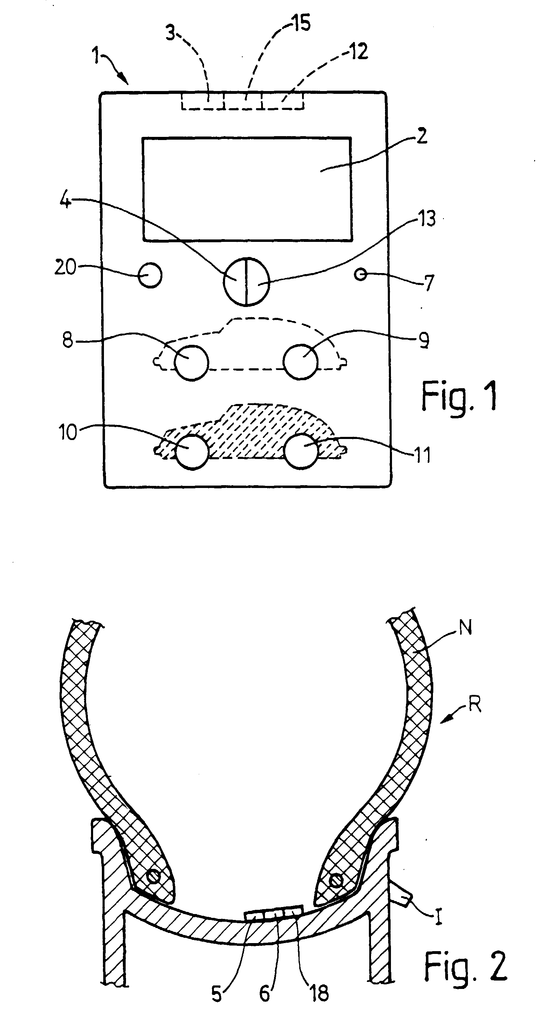

Fig. 1 shows in a front view the remote control unit corresponding to the contemplated device;
Fig. 2 illustrates in a sectional view the detail of the installation of the pressure gage in the wheel of a vehicle;
each of Figs. 3 and 4 illustrates a block diagram corresponding to the remote control unit and the pressure gage, respectively;
Fig. 5 illustrates the block diagram corresponding to the pressure gage and temperature detector;
Fig. 6 shows in a front view the display of the remote control unit;
Fig. 7 represents a chart of the correct tyre pressures charted over the internal temperature of the tyres;
Fig. 8 illustrates in a front view the remote control unit provided to be used with lorries and the like, and
Fig. 9 shows in a diagrammed sectional view the arrangement of the transmitters in the case of a twin-wheeled axle.

According to the drawings this device for controlling the pressure in the pneumatic tyres comprises: a remote control unit 1 having a liquid-crystal display 2 and a receiver sensor 3 actuated by means of a pushbutton 4; and a pressure-measuring instrument 5 installed in the wheel R advantageously in the vicinity of the inflation valve I of the tyre N, and connected to a transmitter 6.

The remote control unit 1 incorporates means to visualize through the display 2 the concrete pressures concerning specific tyres and corresponding to the different loads carried by the motor vehicle, said means being, respectively, the pushbutton or control 7 and the pushbuttons 8, 9, 10 and 11 corresponding to the front and rear wheels of the half-loaded and fully-loaded vehicle.

The remote control unit has also been provided to incorporate a transmitter 12 actuated by means of a pushbutton 13 to transmit to an inflation machine or facility the command to inflate a tyre to the pressure visualized through display 2 of remote control unit 1.

The remote control unit will as well comprise a pushbutton 20 to switch off the device and clear the display 2.

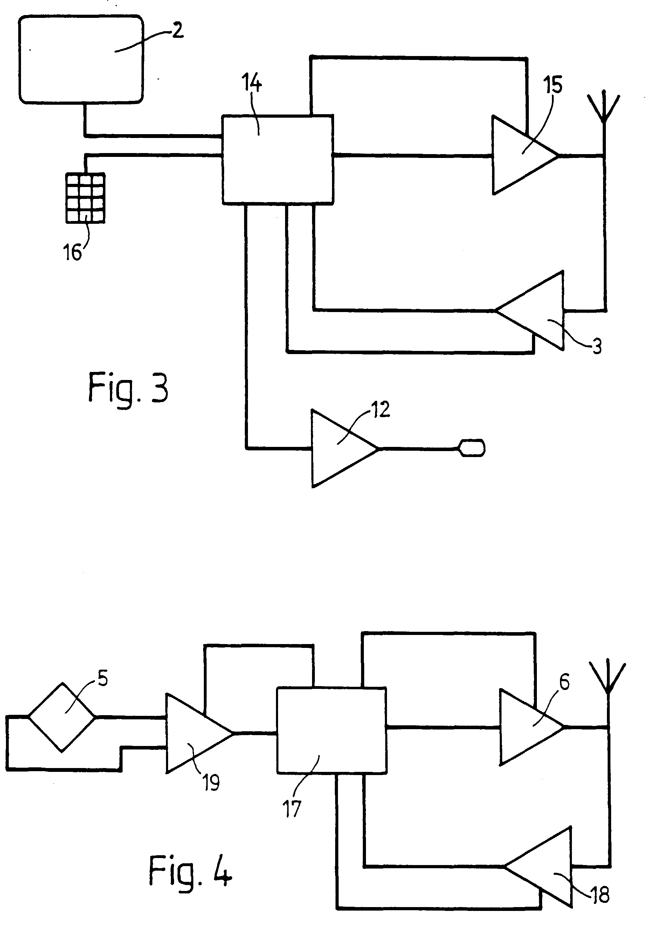

According to Fig. 3 the remote control unit comprises a central processing unit 14 controlling all of the components of said control unit and thus governing all of the elements provided to communicate with the environment such as the radiofrequency receiver sensor 3 provided to receive the informations coming from the measuring instrument 5, the radiofrequency emitter 15 provided to send the commands to the measuring instrument 5, and the infrared transmitter 12 for sending commands to the inflation machine. At reference numeral 16 is indicated a keyset corresponding to each of the pushbuttons comprised by the remote control unit.

According to Fig. 4 the pressure-measuring instrument dos also comprise a central processing unit 17 that will control all of the components of said instrument. This latter comprises as well a transmitter 6 provided to send the informations to the remote control unit 1, and a receiver sensor 18 that receives the commands from said control unit. The pickup comprised is the measuring instrument 5 consisting in an absolute pressure sensing element that will measure the pressure inside the pneumatic tyre N. The connection of this pressure sensing element to the central processing unit is carried out through an intervening analog-to-digital converter 19.

With this arrangement, when bringing the remote control unit 1 near to the pressure-measuring instrument 5 and actuating the pushbutton 4 the pressure of the tyre N is displayed through the display 2 of the remote control unit. When next actuating the pushbutton corresponding to the axle pertaining to the wheel being the object of the measurement (8 or 9) and to the load (10 or 11) borne at the moment the pressure recommended by the manufacturer will be instantly displayed through the display.

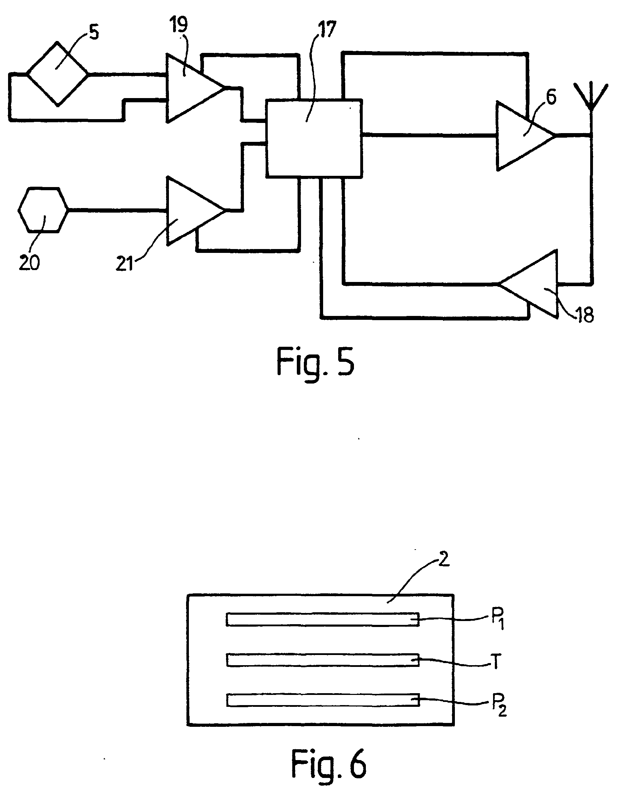

The block diagram of Fig. 5 incorporates a sensor 20 measuring the temperature of the air inside the pneumatic tyre, said sensor being connected to the central processing unit 17 through an intervening analog-to-digital converter 21 and thus complementing the pressure-measuring instrument 5 to be as well connected to the central processing unit by means of an analog-to-digital converter 19 thus forming a detector comprising the transmitter 6 and the receiver sensor 18.

The receiver sensor of the remote control unit picks up the pressure and temperature of the inside of the tyre, the microprocessor forming the central processing unit of said control unit carrying out the conversion of the pressure corresponding to the normal ambient temperature of the tyre to the equivalent pressure as per the temperature of the latter.

After having previously actuated the pushbutton corresponding to the wheel to be controlled, when bringing the remote control unit near to the pressure-measuring instrument and actuating the pushbutton of said control unit the display 2 of the latter then displays the actual pressure P₁ of the tyre and the correct pressure P₂ corresponding to it in accordance with its internal temperature.

Display 2 can complementally display the internal temperature T of the tyre and the indication OK if the pressure is correct or NO OK↑ or NO OK↓ if the pressure is insufficient (increase pressure) or excessive (reduce pressure).

Once having acquired this information it will suffice to connect the wheel with a compressed-air dispenser such as an automated machine or facility at those petrol stations having them, and to pass to it said information collected by the remote control unit, for the inflation to be carried out to the correct pressure for the tyre in question.

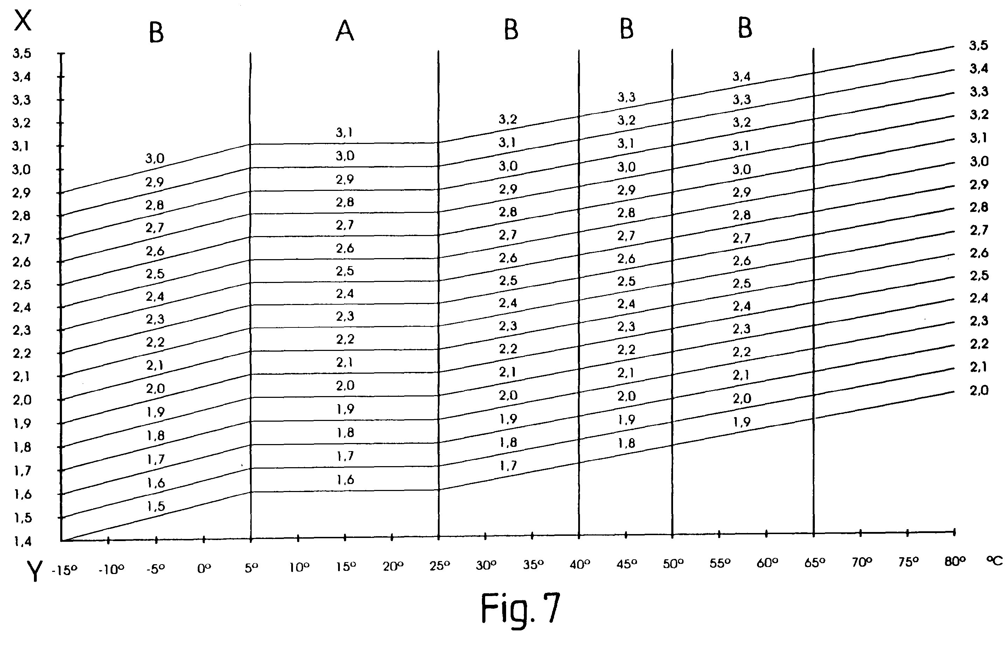

In Fig. 7 the vertical coordinate X indicates the pressure in bars, and the horizontal coordinate Y indicates temperatures in degrees centigrade. In column A appear the recommended pressures at a normal temperature that can be considered as being comprised between 5°C and 25°C, and columns B represent the correct pressures in accordance with the different temperatures.

Thus for example if the correct pressure for a tyre is of 2.5 bars, if the internal temperature of the tyre sinks to a value comprised between 5°C and -15°C the correct pressure will be of 2.4 bars, and if said temperature rises to a value comprised between 40°C and 50°C the correct pressure will be of 2.7 bars.

In the case of the remote control unit 1' provided with the display 2 a series of pushbuttons have been provided corresponding to the wheels of an empty lorry and to those of a fully-loaded lorry. The empty lorry is indicated at V, and the fully-loaded lorry is indicated at PC, the lorry being formed by a hauling member or tractor T and the trailer C, the tractor T having single wheels on the front axle and twin wheels on the rear axle, and the trailer C having three axles with twin wheels at their ends.

In this case the pushbuttons of the remote control unit are: one 22 for the front wheels of the empty lorry and another one 23 for the front wheels of the fully-loaded lorry; other pushbuttons 24 for the outer wheels of the twin wheels and other pushbuttons 25 for the inner wheels of said twin wheels corresponding to the empty lorry; and other pushbuttons 26 for the outer wheels of the twin wheels and yet other pushbuttons 27 for the inner wheels corresponding to the fully-loaded lorry.

In order to make it easier for the user to distinguish the different pushbuttons, pushbuttons 25 and 27 corresponding to the inner wheels of each pair can be, for example, of red colour, and pushbuttons 24 and 26 corresponding to the outer wheels of each pair can be of white colour. Pushbuttons 22 and 23 can be, for example, of yellow colour.

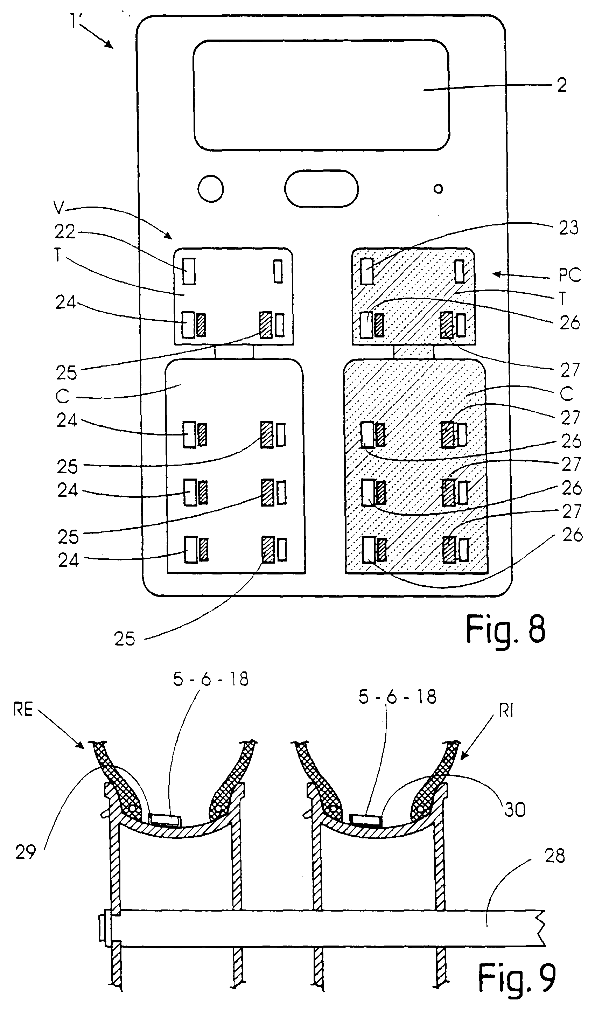

Fig. 9 illustrates a twin-wheeled axle 28 with the outer wheel RE and the inner wheel RI, each of said wheels comprising the assembly 5-6-18 on a carrier 29 and 30 of a respectively different colour that can coincide with that used for the pushbutton of the corresponding sensor of the remote control unit.

Due to the fact that the transmitter 6 of each wheel of each pair emits at a different frequency, when actuating the pushbutton corresponding to a given wheel only the pressure and temperature of the corresponding wheel will be captured.

It is understood that the remote control unit 1' will have the pushbuttons and sensors that are appropriate for each particular type of heavy vehicle, and that apart from the colour as a distinguishing element said pushbuttons and the assembly of elements to be arranged inside the wheel will also comprise any other distinguishing component or motif.

## Claims

1. A device for controlling the pressure in the pneumatic tyres of motorcars and similar vehicles, characterized in that it comprises a remote control unit having a display and a receiver sensor actuated by means of a pushbutton, and a pressure-measuring instrument installed in the wheel and advantageously situated in the vicinity of the tyre inflation valve and connected to a transmitter, in such a way that when bringing the remote control unit near to the pressure-measuring instrument and actuating the pushbutton of the former the pressure of the tyre is displayed through the display of the remote control unit.

2. A device as per claim 1, characterized in that the remote control unit incorporates means to visualize through the display the concrete pressures concerning specific tyres and corresponding to the different loads borne by the motor vehicle.

3. A device as per claim 2, characterized in that the remote control unit incorporates a transmitter actuated by means of a pushbutton to transmit to an inflation machine or facility the command to inflate a tyre to the pressure visualized through the display of the remote control unit.

4. A device as per claim 1, characterized in that the display is a liquid-crystal display.

5. A device as per the previous claims, characterized in that all of the components integrating the remote control unit are incorporated into a conventional remote control unit such as that used to control the opening of the access doors of a motorcar or of a garage door, or the switching on of an alarm system and other devices.

6. A device as per the previous claims, characterized in that the transmissions are carried out by means of radio signals, infrared rays, ultrasounds or other adequate means.

7. A device as per claim 1, characterized in that the receiver sensor captures the internal pressure and temperature of the pneumatic tyre, the device carrying out the conversion of the pressure corresponding to the normal ambient temperature of the tyre to the equivalent pressure as per the temperature of said tyre.

8. A device as per claim 7, characterized in that when bringing the remote control unit near to the pressure-measuring instrument and actuating the pushbutton of the latter the display visualizes the actual pressure of the tyre and the correct pressure corresponding to it in accordance with the temperature of said tyre.

9. A device as per claim 8, characterized in that the internal temperature of the pneumatic tyre is complementally displayed through the display.

10. A device as per claim 7, characterized in that the remote control unit is provided to receive a chip card charged to provide a given number of inflations at an automated machine or facility.

11. A de vice as per claim 1, characterized in that in the case of vehicles with axles provided with twin wheels at their ends each wheel, i.e. the outer and inner wheel, of the pair has its transmitter emitting at a frequency different from that of the other wheel of the pair, the remote control unit comprising a receiver sensor for each of said two wheels in correspondence with the particular frequency of the transmitter of each of said wheels.

12. A device as per claim 11, characterized in that the remote control unit has a pushbutton for each of said sensors.

13. A device as per claims 11 and 12, characterized in that the transmitter corresponding to one of the wheels of each pair will have an appearance allowing to distinguish it from the transmitter of the other wheel of the pair, the pushbuttons of the sensors corresponding to said transmitters also having an appearance allowing to distinguish them from each other.

14. A device as per claim 1, characterized in that the remote control unit comprises as a power source a rechargeable electric battery.

15. A device as per claim 14, characterized in that the remote control unit comprises the ignition key for starting a motorcar or a similar vehicle, and the battery of said control unit is inductively recharged through the insertion of said key into the corresponding contact lock of the vehicle, said lock for such a purpose comprising the appropriate installation connected to the cell or battery of the vehicle itself.

16. A device as per claim 14, characterized in that the rechargeable battery of the remote control unit is inductively recharged by means of arranging said control unit on a support provided for such a purpose and connected to the electrical network.

17. A device as per claim 14, characterized in that the rechargeable battery of the remote control unit is recharged by means of connecting said control unit to the electrical network through an intervening transformer or the like.
